# EUROPÄISCHE PATENTSCHRIFT

(11) **EP 0 787 912 B1**
(45) Veröffentlichungstag und Bekanntmachung des Hinweises auf die Patenterteilung: **27.11.2002**
(21) Anmeldenummer: 97100955.0
(22) Anmeldetag: 22.01.1997
(51) Int. Cl.: F16C 13/02, F16C 13/00

(54) **Durchbiegungseinstellwalze**
Controlled deflection roll
Rouleau à réglage de la flexion

(30) Priorität: 01.02.1996 DE 19603652
(43) Veröffentlichungstag der Anmeldung: 06.08.1997
(73) Patentinhaber: Voith Paper Patent GmbH, 89522 Heidenheim (DE)
(72) Erfinder: Stotz, Wolf Gunter, 88214 Ravensburg (DE); Meschenmoser, Andreas, 88263 Horgenzell (DE); Geromiller, Johannes, 88273 Fronreute (DE)
(74) Vertreter: Finsterwald, Martin

(56) Entgegenhaltungen:
- DE-A- 3 338 625
- DE-U- 29 601 742
- GB-A- 2 022 775

## Beschreibung

Die Erfindung betrifft eine Durchbiegungseinstellwalze der im Oberbegriff des Anspruchs 1 angegebenen Art.

Solche Durchbiegungseinstellwalzen, wie sie in der Praxis häufig in den Preß- und Glättpartien von Papiermaschinen eingesetzt werden, sind bekannt und insbesondere häufig als sogenannte selbstanstellende Durchbiegungseinstellwalzen ausgebildet, bei denen der Walzenmantel zum Öffnen und Zustellen des Preßspaltes durch Stützelemente gegenüber dem Joch um mehrere Zentimeter verlagert werden kann. Bei einer solchen Durchbiegungseinstellwalze, wie sie beispielsweise aus der EP 0 454 951 B1 bekannt ist, sind die Lagergehäuse, an denen der Walzenmantel endseitig drehbar gehalten ist, durch eine außenseitig an den Lagergehäusen angreifende Drehmomentstütze gegen ein Verdrehen gesichert, um die Drehmomente, die im Betrieb von dem Antrieb an das Lagergehäuse zwangsläufig übertragen werden, aufzufangen.

Durch diese Art der Abstützung der Lagergehäuse gestaltet sich der Walzenwechsel unpraktisch, da es erforderlich ist, die Verbindung zwischen der Drehmomentstütze und dem Lagergehäuse zu lösen.

Aufgabe der Erfindung ist es somit, eine Durchbiegungseinstellwalze der eingangs genannten Art zu schaffen, bei der die Drehmomentabstützung auf konstruktiv einfache Weise erfolgt und der Walzenwechsel durch die Drehmomentstütze nicht behindert wird.

Diese Aufgabe wird erfindungsgemäß durch die im Kennzeichen Anspruchs 1 angegebenen Merkmale gelöst.

Durch die vorgesehe Abstützung des Lagergehäuses im Walzeninneren kann die erfindungsgemäße Durchbiegungseinstellwalze auf einfache Weise gewechselt werden, ohne daß es wie beim Stand der Technik erforderlich ist, die Drehmomentstütze vom Lagergehäuse zu lösen.

Außerdem erfolgt die Drehmomentabstützung in vorteilhafter Weise nahe den Stellen, an denen die die Drehmomente erzeugenden Kräfte in das Lagergehäuse eingeleitet werden.

Die Führungselemente sind zweckmäßigerweise in der Preßeberie angeordnet sind, wodurch auf konstruktiv einfache und effektive Weise die Drehmomente vom Joch aufgenommen werden können. Es sind aber auch andere Verdrehsicherungen zwischen Joch und innerem Führungsansatz möglich.

In vorteilhafter Weise sind gemäß einer weiteren Ausführungsform der Erfindung zwei Paare von zusammenwirkenden Führungselementen auf diametral gegenüberliegenden Seiten des Jochs vorgesehen.

In alternativer Weise kann ein Paar von Führungselementen zwischen Joch und Führungsansatz und vorzugsweise auf der den Führungselementen gegenüberliegenden Seite des Jochs ein weiteres Paar von Führungselementen vorgesehen sein, wobei die beiden Paare von Führungselementen auf sich axial gegenüberliegenden Seiten eines den Antrieb für den Walzenmantel bildenden Zahnradsatzes angeordnet sind.

Bei einer selbstbelastenden Walze, bei der die Lagergehäuse mit dem Walzenmantel gegenüber dem Joch im wesentlichen in der Preßebene senkrecht zur Walzenachse frei beweglich sind, wirken in vorteilhafter Weise die beiden Paare von Führungselementen auch zur Führung der Hubbewegung zusammen, so daß eine zusätzliche Führung des Lagergehäuses nicht erforderlich ist.

Gemäß einer bevorzugten Ausführungsform ist wenigstens ein Lagergehäuse jedoch zusätzlich axial am Flansch eines drehbar am Joch gehaltenen Führungsrings in der Preßebene im wesentlichen senkrecht zur Walzenmantelachse geführt. Dabei ist der Führungsring in vorteilhafter Weise durch ein Gelenklager mit einer kugelförmigen Lagerfläche dreh- und kippbar am Joch gehalten, so daß der Führungsring auch bei einer Durchbiegung des Jochs im Betrieb eine für die Führung der Verstellbewegung des Walzenmantels optimale Lage einnehmen kann.

Die axialen Mitten einer Antriebsverzahnung für den Walzenmantel, eines den Walzenmantel am Lagergehäuse drehbar haltenden Lagers und der kugeligen Lagerung des Führungsrings liegen vorzugsweise im wesentlichen in einer zur Walzenachse senkrecht stehenden gemeinsamen Ebene. Diese Anordnung verhindert, daß im Betrieb Momente entstehen, welche sich nachteilig auf den Zahneingriff auswirken könnten, so daß sich die Zahnflanken im Rahmen der Lagerspiele in den Hauptlagern optimal aneinander anlegen können.

Weiterhin können an den Walzenenden zwischen dem Walzenmantel oder dem axialen Fortsatz des Walzenmantels und dem Joch zur Dämpfung von Relativbewegungen zwischen Joch und Walzenmantel wirksame Dämpfungsvorrichtungen vorgesehen sein, durch die schwingungsbedingte Relativbewegungen zwischen Walzenmantel und Joch im Betrieb wirksam verringert werden, so daß die Lebensdauer der den Preßspalt durchlaufenden Walzenbezüge sowie Filzbahnen erhöht und die Walzprodukte vergleichmäßigt werden können.

Gemäß einer Ausführungsform der Erfindung weist wenigstens eine Dämpfungsvorrichtung mindestens ein innerhalb der Walze zwischen dem Walzenmantel oder dem axialen Fortsatz des Walzenmantels und dem Joch vorgesehenes Dämpfungselement auf. Alternativ ist es jedoch auch möglich, das Dämpfungselement außerhalb der Walze vorzusehen und Relativbewegungen zwischen Walzenmantel und Joch durch eine Zylinder/Kolben-Anordnung der Dämpfungsvorrichtung aufzunehmen und über Hydraulikleitung zu dem Dämpfungselement weiterzuleiten, wodurch der bauliche Aufwand innerhalb der Walze gering gehalten werden kann.

Zweckmäßigerweise ist dabei das Dämpfungselement bzw. die Zylinder/Kolben-Anordnung der Dämpfungsvorrichtung zwischen einem gegenüber dem zentralen Bereich des Jochs verjüngten Jochzapfen und dem axialen Fortsatz des Walzenmantels vorgesehen, wo ausreichend Platz zur Verfügung steht.

In vorteilhafter Weise sind die Dämpfungselemente bzw. die Zylinder/Kolben-Anordnungen der Dämpfungsvorrichtungen wenigstens teilweise zwischen dem Joch und einem sich in den Zwischenraum zwischen Joch und Walzenmantel erstreckenden Führungsansatz, welcher über Lager mit dem Walzenmantel hubkonform gekoppelt ist, d.h. zwischen zwei nicht drehenden Bauteilen, abgestützt, so daß die Dämpfungselemente bzw. Zylinder/Kolben-Anordnungen relativ einfach aufgebaut sein können und es außerdem möglich ist, die Dämpfung im Betrieb der Walze zu steuern.

Es können unterschiedliche Dämpfungselemente verwendet werden, wie z.B. Verdrängungs-, Quetsch- oder Reibungsdämpfer, die eine Zylinder/Kolben-Anordnung mit einem mit Hydraulikflüssigkeit wenigstens teilweise gefüllten Zylinder und einem in den Zylinder eingreifenden, axiale Durchgangsöffnungen aufweisenden Kolben umfassen.

Es kann ausreichend sein, Dämpfungselemente nur an den Walzenenden vorzusehen. Gemäß einer vorteilhaften Ausführungsform der Erfindung sind zusätzliche Dämpfungselemente zwischen den Stützelementen, durch welche der Walzenmantel gegenüber dem Joch abgestützt ist, vorgesehen. Der Kolben wird dann durch eine Feder an die Innenseite des Walzenmantels angedrückt, wobei dort für ausreichende Schmierung zu sorgen ist. Es wird vor allem sichergestellt, daß der Kolben immer im Kraftschluß mit dem Walzenmantel steht. Durch diese Anordnung wird über die Jochlänge eine Breitbanddämpfung erreicht.

Außerdem kann eine Zylinder/Kolben-Anordnung zwischen dem Joch und dem Walzenmantel oder dessen axialem Fortsatz oder dem Führungsansatz des Lagergehäuses vorgesehen sein, um den Walzenmantel von den außerhalb der Arbeitsbreite des Walzenmantels wirksamen Gewichtskräften zu entlasten und/oder die Mantelenden zur Beeinflussung der Preßkraftverteilung im Preßspalt durch gesteuerte Druckmittelbeaufschlagung zu beoder entlasten und/oder den Walzenmantel in von einer Gegenwalze abgehobener Position durch Absperren des Druckmittel-Rückflusses aus der Zylinder/Kolben-Anordnung zu arretieren.

Hinsichtlich weiterer vorteilhafter Ausgestaltungen der Erfindung wird auf die Unteransprüche sowie die nachfolgende Beschreibung von Ausführungsbeispielen unter Bezugnahme auf die Zeichnung verwiesen. In der Zeichnung zeigt
- Figur 1: im Längsschnitt das antriebsseitige Ende einer ersten Ausführungsform einer erfindungsgemäßen Durchbiegungseinstellwalze mit einem gegenüber dem Joch frei verstellbaren Walzenmantel,
- Figur 2: im Längsschnitt das antriebsseitige Ende einer Variante der in Figur 1 dargestellten Ausführungsform einer erfindungsgemäßen Durchbiegungseinstellwalze,
- Figur 3: im Längsschnitt das antriebsseitige Ende einer zweiten Ausführungsform einer erfindungsgemäßen Durchbiegungseinstellwalze mit einem gegenüber dem Joch frei beweglichen Walzenmantel, und
- Figur 4: die in Figur 3 dargestellte Durchbiegungseinstellwalze mit einem an seinen axialen Enden fest, d.h. in Radialrichtung der Walze unverstellbar, am Joch gelagerten Walzenmantel, wobei diese Ausführungsform nicht beansprucht ist, sondern zur Illustration der Fachgebiete dient.

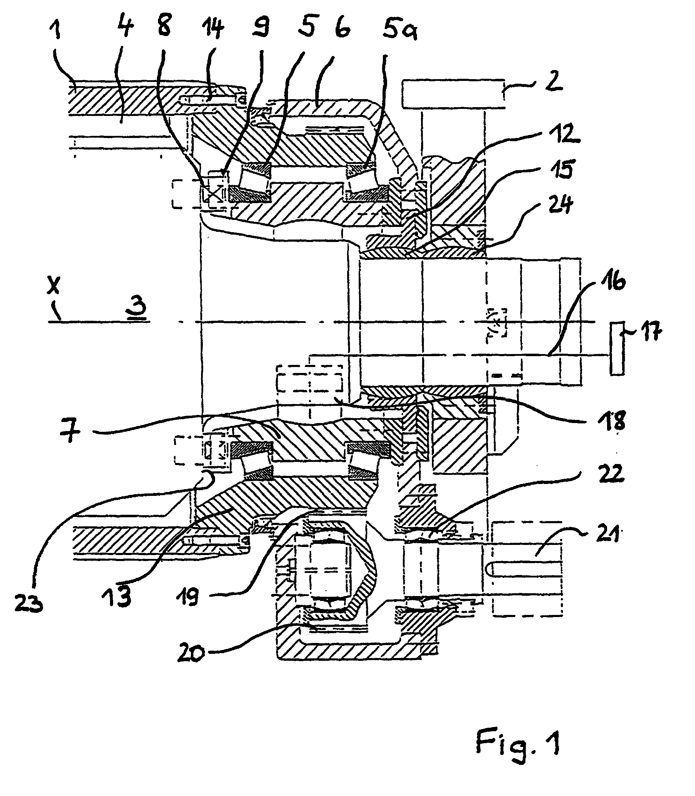

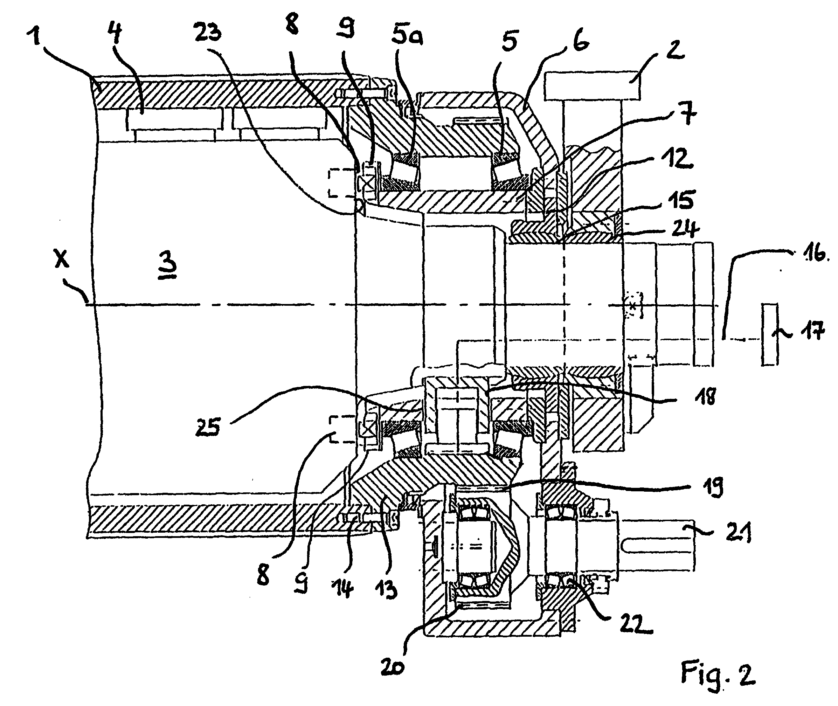

Die Figuren 1 und 2 zeigen zwei Varianten einer ersten Ausführungsform einer erfindungsgemäßen Durchbiegungseinstellwalze im Längsschnitt. Zu der Durchbiegungseinstellwalze gehören ein umlaufender Walzenmantel 1 und ein den Walzenmantel 1 axial durchsetzendes, endseitig an einem Gestell 2 durch Pendellager 24 gehaltenes Joch 3. An dem Joch 3 sind in Achsrichtung X der Walze nebeneinanderliegend eine Mehrzahl von unabhängig voneinander ansteuerbaren hydrostatischen oder hydrodynamischen Stützelementen 4 angeordnet, welche auf die Innenseite des Walzenmantels 1 in einer Preßebene eine Stützkraft ausüben.

Der Walzenmantel 1 weist an seinen Enden jeweils einen axialen Fortsatz 13 auf, der durch Schrauben 14 unmittelbar an der Stirnfläche des Walzenmantels 1 befestigt ist, und ist im Bereich dieses axialen Fortsatzes 13 an einem sich in den zwischen Joch 3 und Walzenmantel 1 gebildeten Ringraum erstreckenden Führungsansatz 7 eines Lagergehäuses 6 durch Wälzlager 5, 5a drehbar gelagert.

An dem in den Figuren 1 und 2 dargestellten Antriebsende der Durchbiegungseinstellwalze ist an der Außenseite des axialen Fortsatzes 13 des Walzenmantels 1 ein Zahnkranz 19 vorgesehen, der mit einem Antriebsritzel 20 eines Antriebs kämmt, dessen Ritzelwelle 21 parallel zur Walzenachse X verläuft und durch Wälzlager 22 in dem Lagergehäuse 6 gelagert ist.

Die Walze ist als selbstbelastende Durchbiegungseinstellwalze ausgebildet, d.h. der Walzenmantel 1 ist gegenüber dem Joch 3 in der Preßebene der Stützelemente 4 senkrecht zur Walzenachse X frei beweglich angeordnet. Zur Führung dieser Hubbewegung sind an dem Führungsansatz 7, an dem der Walzenmantel 1 drehbar gelagert ist, zwei in der Preßebene auf gegenüberliegenden Seiten des Jochs 3 angeordnete Führungsnuten 9 und an einer Stirnfläche 23 des Jochs 3 zwei mit den Führungsnuten 9 zur Führung des Lagergehäuses 6 in Eingriff stehende Zapfen 8 vorgesehen.

Die Zapfen/Führungsnut-Anordnungen 8, 9 führen nicht nur das Lagergehäuse 6 in der Preßebene senkrecht zur Walzenachse X, sondern stützen das Lagergehäuse 6 außerdem gegen ein Verdrehen um die Walzenachse X ab.

Zur axialen Führung der Hubbewegung des Lagergehäuses 6 an dem Joch 3 ist weiterhin ein Führungsring 12 durch ein Pendellager axialfest aber neig- und drehbar an dem Joch 3 angebracht, der außenseitig zwei parallele, einander bezüglich der Ringachse gegenüberliegende und parallel zur Verstellrichtung des Lagergehäuses 6 angeordnete Führungsflächen aufweist.

Der Führungsring 12 greift in einen im Lagergehäuse 6 vorgesehenen Führungsschlitz ein und wirkt mit diesem zur Führung des Lagergehäuses 6 zusammen.

Zur Dämpfung von Relativbewegungen, die im Betrieb aufgrund von in der Papiermaschine auftretenden Resonanzschwingungen zwischen dem Joch 3 und dem Walzenmantel 1 auftreten können, ist an beiden Walzenenden jeweils eine zwischen dem Joch 3 und dem Walzenmantel 1 wirksame Dämpfungsvorrichtung vorgesehen.

Bei der in Figur 1 dargestellten ersten Ausführungsform einer erfindungsgemäßen Durchbiegungseinstellwalze gehört zu der Dämpfungsvorrichtung eine Zylinder/Kolben-Anordnung 18, die sich zwischen dem Joch 3 und dem in den Ringraum zwischen Joch 3 und Walzenmantel 1 eingreifenden Führungsansatz 7 des Lagergehäuses 6 abstützt und die Relativbewegungen zwischen Walzenmantel 1 und Joch 3 aufnimmt und über eine Druckmittelleitung 16 an ein außerhalb der Walze vorgesehenes Dämpfungselement 17 weiterleitet, das in an sich bekannter Weise beispielsweise als Verdrängungs-, Quetschöl- oder Reibungsdämpfer ausgebildet sein kann.

Die Zylinder/Kolben-Anordnung 18 dient auch dazu, den Walzenmantel von den außerhalb der Arbeitsbreite des Walzenmantels wirksamen Gewichtskräften zu entlasten und/oder die Mantelenden zur Beeinflussung der Preßkraftverteilung im Preßspalt durch gesteuerte Druckmittelbeaufschlagung zu beoder entlasten und/oder den Walzenmantel in von einer Gegenwalze abgehobener Position durch Absperren des Druckmittel-Rückflusses aus der Zylinder/Kolben-Anordnung zu arretieren.

Die vorgesehene Abstützung der Zylinder/Kolben-Anordnung 18 zwischen zwei nicht drehenden Bauteilen hat den Vorteil, daß die Zylinder/Kolben-Anordnung 18 relativ einfach aufgebaut sein kann.

Außerdem ist es möglich, die dämpfenden Funktionen der Dämpfungsvorrichtung im Betrieb der Walze zu beeinflussen, d.h. zu optimieren.

Die Zylinder/Kolben-Anordnung 18 kann sich in alternativer Weise sich auch wie bei der in Figur 2 gezeigten Durchbiegungseinstellwalze zwischen dem Joch 3 und dem axialen Fortsatz 13 des Walzenmantels 1 erstrecken, wobei es eine Öffnung 25 in dem Führungsansatz 7 des Lagergehäuses 6 durchgreift. In diesem Fall ist die Zylinder/Kolben-Anordnung 18 als hydrostatisches oder hydrodynamisches Stützelement ausgebildet, um ein reibungsarmes Gleiten am sich drehenden Walzenmantel 1 zu ermöglichen.

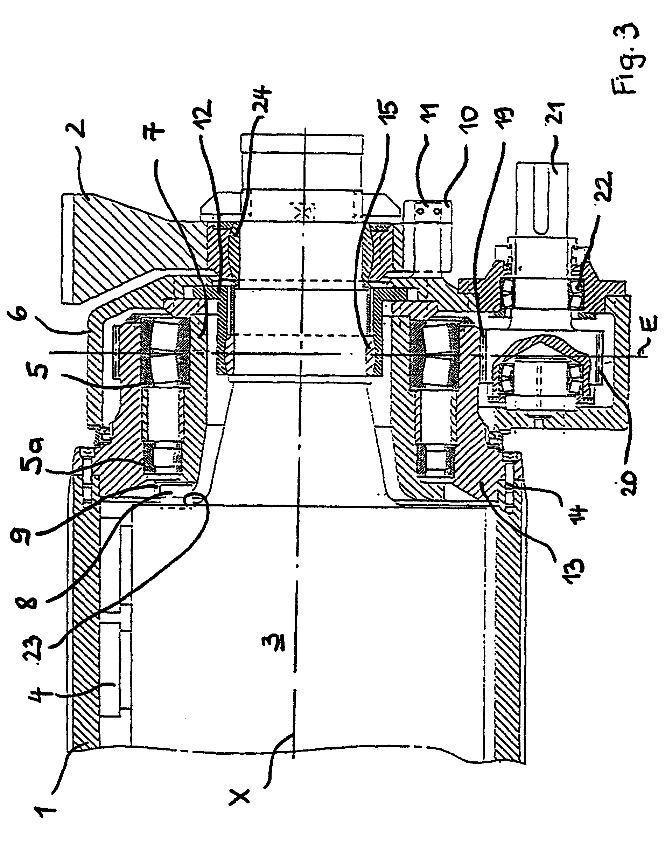

Die Figur 3 zeigt eine zweite Ausführungsform einer erfindungsgemäßen Durchbiegungseinstellwalze. Diese Durchbiegungseinstellwalze hat den gleichen Grundaufbau wie die zuvor erläuterte, in Figur 1 bzw. Figur 2 dargestellte Durchbiegungseinstellwalze und umfaßt ein stationär in einem Gestell 2 gehaltenes Joch 3 und einen drehbaren Walzenmantel 1, der gegenüber dem Joch 3 durch Stützelemente 4 abgestützt ist und an seinen axialen Enden innenseitig an einem Führungsansatz 7 eines gegen Verdrehung gesicherten, in der Preßebene senkrecht zur Walzenachse X verstellbaren Lagergehäuse 6 durch ein Pendelrollenlager 5 und ein Einfachrollenlager 5a gelagert ist.

Zur Führung der Verstellbewegung des Lagergehäuses 6 ist innerhalb des Walzenmantels 1 an dem Führungsansatz 7 eine Führungsnut 9 und an einer Stirnfläche 23 des Jochs 3 ein in die Führungsnut 9 eingreifender Zapfen 8 vorgesehen.

Auf der den Führungselementen 8, 9 gegenüberliegenden Seite des Jochs 3 ist das Lagergehäuse 6 außerdem außerhalb des Walzenmantels 1 durch an dem Gestell 2 und dem Lagergehäuse 6 vorgesehene Führungselemente 10, 11 gegen Verdrehung gesichert und geführt.

Dadurch, daß die beiden Paare von Führungselementen 8, 9, 10, 11 auf gegenüberliegenden Seiten des Jochs 3 und auf sich axial gegenüberliegenden Seiten des den Antrieb bildenden Zahnradsatzes 19, 20 vorgesehen sind, wird eine optimale Abstützung und Führung des Lagergehäuses 6 erreicht.

Zur axialen Führung des Lagergehäuses 6 ist weiterhin ein Führungsring 12 vorgesehen, der durch ein Gelenklager 15 mit einer kugeligen Lagerfläche dreh- und kippbar an dem Joch 3 gelagert ist, so daß er sich im wesentlichen frei gegenüber dem Joch 3 einstellen kann und somit seine Lage unabhängig von der Durchbiegung des Joches 3 ist. Der Führungsring 12 greift in einen Führungsschlitz des Lagergehäuses 6 ein und weist außenseitig Führungsflächen auf, die mit dem Führungsschlitz zur Führung des Lagergehäuses 6 zusammenwirken.

Wie die Figur 3 zeigt, liegen die axialen Mittelpunkte des Zahnkranzes 19, des die Hauptlagerung darstellenden Doppelrollenlagers 5 und die kugelige Lagerung des Führungsrings 12 in einer gemeinsamen, senkrecht zur Walzenachse X verlaufenden Ebene E, wodurch erreicht wird, daß im Betrieb keine nachteiligen Momente auftreten können und damit der Zahneingriff zwischen dem Zahnkranz 19 und dem Antriebsritzel 20 nicht beeinträchtigt wird.

Bei dieser Ausführungsform bildet der Führungsring 12 auch einen radialen Anschlag für die Verstellbewegung des Lagergehäuses 6 in der Preßebene, an dem das Lagergehäuse 6 im Betrieb anliegt, wodurch im Betrieb gewissermaßen eine direkte Lagerung des Walzenmantels 1 auf dem Joch 3 bewirkt wird.

Zur Verstellung des Walzenmantels 1 gegenüber dem Joch werden bei den in den Figuren 1 bis 3 dargestellten Durchbiegungseinstellwalzen die Stützelemente 4 tätig, wodurch der Walzenmantel 1 angehoben oder abgesenkt wird. Die Führung dieser Verstellbewegung des Walzenmantels erfolgt an den Walzenenden über die Lagergehäuse 6, die durch die Zapfen/Führungsnuten-Anordnungen 8, 9; 10, 11 gegen ein Verdrehen gesichert und senkrecht zur Walzenachse X in der Preßebene geführt sind und durch den Führungsring 12 zusätzlich am Joch 3 gegen seitliches Verschieben gesichert sind.

Da der Führungsring 12 drehbar und bei der in Figur 3 dargestellten Ausführungsform auch kippbar gegenüber dem Joch 3 ist, kann er unabhängig von der Durchbiegung der Walze stets die für die Führung des jeweiligen Lagergehäuses 6 optimale Lage einnehmen, so daß beispielsweise ein Verklemmen im Führungsbereich ausgeschlossen ist.

Dabei werden aufgrund von Schwingungen zwischen dem Walzenmantel 1 und dem Joch 3 stattfindende Relativbewegungen durch die Dämpfungselemente 17 wirksam verringert, so daß die Lebensdauer der den Preßspalt durchlaufenden Walzenbezüge und Filzbahnen erhöht und die hergestellten Papierbahnen vergleichmäßigt werden können.

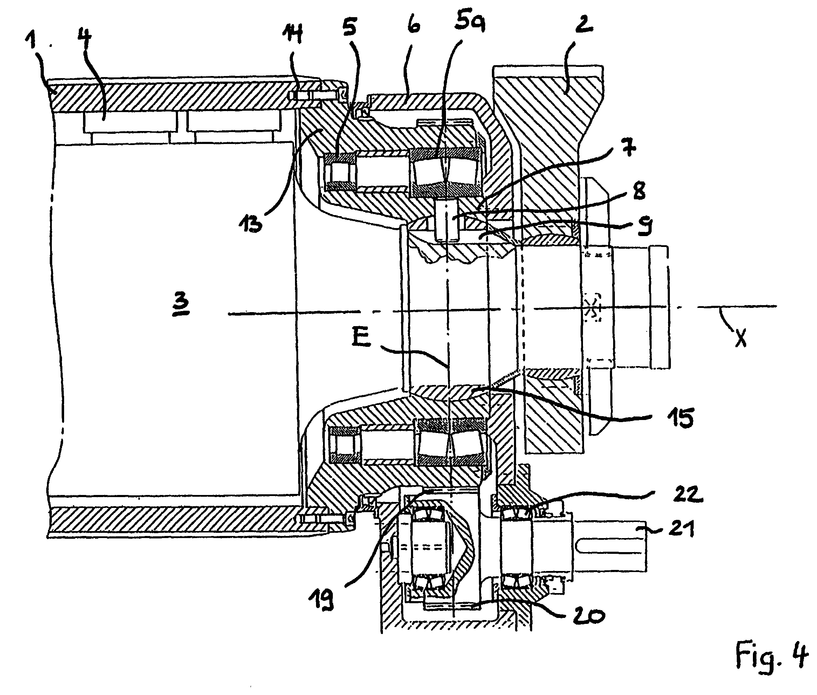

Die Figur 4 zeigt eine nicht beanspruchte Ausführungsform einer Durchbiegungseinstellwalze, die wie die in Figur 3 dargestellte Durchbiegungseinstellwalze aufgebaut ist, bei der jedoch der Walzenmantel 1 gegenüber dem Joch 3 nicht frei verstellbar, sondern endseitig am Joch 3 fest, d.h. in Radialrichtung unbeweglich, gehalten ist. Der Walzenmantel 1 ist am Joch 3 durch ein auf das Joch 3 aufgeschobenes Gelenklager 15 mit einer kugeligen Lagerfläche, an dem der Führungsansatz 7 des Lagergehäuses 6 kippbar gelagert ist.

Um ein Verdrehen des Lagergehäuses 6 im Betrieb zu verhindern, ist in dem Führungsansatz 7 ein Zapfen 8 vorgesehen, der das Gelenklager 15 durchgreift und in eine im Joch 3 vorgesehene Führungsnut 9 eingreift.

### Bezugszeichenliste

- 1: Walzenmantel
- 2: Gestell
- 3: Joch
- 4: Stützelement
- 5: Lager
- 5a: Lager
- 6: Lagergehäuse
- 7: Gehäuseansatz
- 8: Führungselement
- 9: Führungselement
- 10: Führungselement
- 11: Führungselement
- 12: Führungsring
- 13: axialer Fortsatz
- 14: Schrauben
- 15: Gelenklager
- 16: Druckmittelleitung
- 17: Dämpfungselement
- 18: Zylinder/Kolben-Anordnung
- 19: Zahnkranz
- 20: Antriebsritzel
- 21: Ritzelwelle
- 22: Wälzlager
- 23: Stirnfläche
- 24: Pendellager
- 25: Öffnung

- X: Walzenachse
- E: Ebene

## Patentansprüche

1. Durchbiegungseinstellwalze mit einem umlaufenden Walzenmantel (1), einem den Walzenmantel (1) axial durchsetzenden, endseitig drehfest in Gestellen (2) gehaltenen Joch (3) und wenigstens einem am Joch (3) angeordneten, auf die Innenseite des Walzenmantels (1) in einer Preßebene eine Stützkraft ausübenden Stützelement (4), wobei wenigstens ein axiales Ende des Walzenmantels (1) oder ein diesem zugeordneter axialer Fortsatz (13) durch wenigstens ein Lager (5, 5a) drehbar auf einem sich in den Bereich zwischen Walzenmantel (1) bzw. axialem Fortsatz (13) und Joch (3) erstreckenden axialen Führungsansatz (7) eines Lagergehäuses (6, 7) gelagert ist, wobei der axiale Führungsansatz durch eine Drehmomentstütze am Joch (3) gegen Verdrehung gesichert ist, um die Drehmomente, die im Betrieb von dem Antrieb an der Lagergehäuse zwangsläufig übertragen werden, aufzufangen,
**dadurch gekennzeichnet,**
**daß** das Lagergehäuse (6, 7) im Bereich eines axialen Endes seines Führungsansatzes (7) an einem dreh- und kippbar am Joch (3) gehaltenen Führungsring (12) senkrecht zur Walzenachse in der Preßebene geradlinig geführt ist und daß der axiale Führungsansatz (7) an seinem entgegengesetzten Ende durch wenigstens ein Paar von an ihm bzw. am Joch (3) vorgesehenen Führungselementen (8, 9) gegen Verdrehung gesichert ist, welche als die Drehmomentstütze bezüglich des Antriebs wirken.

2. Durchbiegungseinstellwalze nach Anspruch 1,
**dadurch gekennzeichnet,**
**daß** die Lagergehäuse (6, 7) an beiden Walzenenden am Joch (3) gegen Verdrehung gesichert sind.

3. Durchbiegungseinstellwalze nach Anspruch 1 oder 2,
**dadurch gekennzeichnet,**
**daß** die Führungselemente (8, 9) im wesentlichen in der Preßebene angeordnet sind.

4. Durchbiegungseinstellwalze nach einem der Ansprüche 1 bis 3,
**dadurch gekennzeichnet,**
**daß** zwei Paare von zusammenwirkenden Führungselemententen (8, 9) auf diametral gegenüberliegenden Seiten des Jochs (3) vorgesehen sind.

5. Durchbiegungseinstellwalze nach einem der Ansprüche 1 bis 3,
**dadurch gekennzeichnet,**
**daß** ein Paar von Führungselementen (8, 9) zwischen Joch (3) und Führungsansatz (7) vorgesehen ist und vorzugsweise auf der den Führungselementen (8, 9) gegenüberliegenden Seite des Jochs (3) ein weiteres Paar von Führungselementen (10, 11) vorgesehen ist, wobei die beiden Paare von Führungselementen (8, 9; 10, 11) auf sich axial gegenüberliegenden Seiten eines den Antrieb für den Walzenmantel (1) bildenden Zahnradsatzes (19, 20)angeordnet sind.

6. Durchbiegungseinstellwalze nach einem der Ansprüche 1 bis 5,
**dadurch gekennzeichnet,**
**daß** das Lagergehäuse (6, 7) gegenüber dem Joch (3) im wesentlichen in der Preßebene und senkrecht zur Walzenachse frei beweglich ist und die Führungselemente (8, 9; 10, 11) zur Führung der Hub-/Verschiebebewegung zusammenwirken.

7. Durchbiegungseinstellwalze nach einem der Ansprüche 1 bis 6,
**dadurch gekennzeichnet,**
**daß** als Führungselemente (8, 9; 10, 11) Zapfen (8, 11) und/oder darauf drehbar angeordnete Ringe und mit diesen in Eingriff stehende Führungsnuten (9, 10) vorgesehen sind.

8. Durchbiegungseinstellwalze nach Anspruch 6 oder 7,
**dadurch gekennzeichnet,**
**daß** der Führungsring (12) außenseitig einen Führungsflansch aufweist.

9. Durchbiegungseinstellwalze nach Anspruch 8,
**dadurch gekennzeichnet,**
**daß** der Führungsring (12) durch ein Gelenklager (15) mit insbesondere kugelförmiger Lagerfläche dreh- und kippbar am Joch (3) gehalten ist.

10. Durchbiegungseinstellwalze nach einem der Ansprüche 6 bis 9,
**dadurch gekennzeichnet,**
**daß** der Walzenmantel (1) oder dessen axialer Fortsatz (13) an einem axialen Ende außenseitig einen Zahnkranz (19) trägt und daß die axialen Mitten des Zahnkranzes (19), des den Walzenmantel (1) am Lagergehäuse (6, 7) drehbar haltenden Lagers (5) und der kugeligen Lagerung des Führungsrings (12) im wesentlichen in einer zur Walzenachse (X) senkrecht stehenden gemeinsamen Ebene (E) liegen.

11. Durchbiegungseinstellwalze nach einem der Ansprüche 6 bis 10,
**dadurch gekennzeichnet,**
**daß** der Führungsring (12) als Anschlag für die Verstellbewegung der Lagergehäuse (6, 7) in der Preßebene dient, an dem das Lagergehäuse (6, 7) im Betrieb der Walze anliegt.

12. Durchbiegungseinstellwalze nach einem der Ansprüche 6 bis 11,
**dadurch gekennzeichnet,**
**daß** mindestens eine Zylinder-Kolben-Anordnung (18) zwischen dem Joch (3) und dem Walzenmantel (1) oder dessen axialem Fortsatz (13) oder dem Führungsansatz (7) des Lagergehäuses (6, 7) vorgesehen ist, um den Walzenmantel (1) von den außerhalb der Arbeitsbreite des Walzenmantels (1) wirksamen Gewichtskräften zu entlasten und/oder die Mantelenden zur Beeinflussung der Preßkraftverteilung im Preßspalt durch gesteuerte Druckmittelbeaufschlagung zu be- oder entlasten und/oder den Walzenmantel (1) in von einer Gegenwalze abgehobener Position durch Absperren des Druckmittel-Rückflusses aus der Zylinder/Kolben-Anordnung (18) zu arretieren.

13. Durchbiegungseinstellwalze nach einem der Ansprüche 6 bis 12,
**dadurch gekennzeichnet,**
**daß** an wenigstens einem der Walzenenden mindestens eine zwischen dem Walzenmantel (1) bzw. dem axialen Fortsatz (13) des Walzenmantels (1) und dem Joch (3) zur Dämpfung von Relativbewegungen zwischen Joch (3) und Walzenmantel (1) wirksame Dämpfungsvorrichtung vorgesehen ist.

14. Durchbiegungseinstellwalze nach Anspruch 13
**dadurch gekennzeichnet,**
**daß** an beiden Walzenenden Dämpfungsvorrichtungen vorgesehen sind.

15. Durchbiegungseinstellwalze nach Anspruch 13 oder 14,
**dadurch gekennzeichnet,**
**daß** wenigstens eine Dämpfungsvorrichtung mindestens ein zwischen dem Walzenmantel (1) oder dem axialen Fortsatz (13) des Walzenmantels (1) und dem Joch (3) vorgesehenes Dämpfungselement (17) aufweist.

16. Durchbiegungseinstellwalze nach einem der Ansprüche 13 bis 15,
**dadurch gekennzeichnet,**
**daß** wenigstens eine Dämpfungsvorrichtung ein außerhalb der Walze vorgesehenes Dämpfungselement (17) aufweist und Relativbewegungen zwischen Walzenmantel (1) und Joch (3) von einer Zylinder/Kolben-Anordnung (18) aufgenommen und über Hydraulikleitung zu dem Dämpfungselement (17) weitergeleitet werden.

17. Durchbiegungseinstellwalze nach Anspruch 15 oder 16,
**dadurch gekennzeichnet,**
**daß** das Dämpfungselement (17) bzw. die Zylinder/Kolben-Anordnung (18) wenigstens einer Dämpfungsvorrichtung sich zwischen einem gegenüber dem zentralen Bereich des Jochs (3) verjüngten Jochzapfen und dem axialen Fortsatz (13) des Walzenmantels (1) befindet.

18. Durchbiegungseinstellwalze nach einem der Ansprüche 15 bis 17,
**dadurch gekennzeichnet,**
**daß** der Walzenmantel (1) an dem Lagergehäuse (6) durch zwei axial beabstandete Wälzlager (5, 5a) gehalten ist und das Dämpfungselement (17) bzw. die Zylinder-Kolben-Anordnung (18) wenigstens einer Dämpfungsvorrichtung zwischen den beiden Wälzlagern (5, 5a) vorgesehen ist.

19. Durchbiegungseinstellwalze nach einem der Ansprüche 15 bis 18,
**dadurch gekennzeichnet,**
**daß** sich das Dämpfungselement (17) bzw. die Zylinder-Kolben-Anordnung (18) wenigstens einer Dämpfungsvorrichtung zwischen dem Joch (3) und einem sich in den Zwischenraum zwischen Joch (3) und Walzenmantel (1) erstreckenden Führungsansatz (7) abstützt, der über Lager mit dem Walzenmantel (1) hubkonform gekoppelt ist.

20. Durchbiegungseinstellwalze nach einem der Ansprüche 15 bis 19,
**dadurch gekennzeichnet,**
**daß** in den Zwischenraum zwischen dem Joch (3) bzw. dem Jochzapfen und dem Walzenmantel (1) bzw. dem axialen Fortsatz (13) des Walzenmantels (1) ein über Lager mit dem Walzenmantel (1) hubkonform gekoppelter Führungsansatz (7) eingreift und das Dämpfungselement (17) bzw. die Zylinder/Kolben-Anordnung (18) wenigstens einer Dämpfungsvorrichtung den Führungsansatz (7) durchgreift und direkt auf die Innenseite des Walzenmantels (1) bzw. des Fortsatzes (13) wirkt.

21. Durchbiegungseinstellwalze nach Anspruch 20,
**dadurch gekennzeichnet,**
**daß** zur Überwindung der Relativbewegung zwischen statischem Dämpfungselement (17) und rotierendem Walzenmantel (1) bzw. axialem Fortsatz (13) hydrostatische Taschen im Dämpfungselement (17) bzw. der Zylinder/Kolben-Anordnung (18) vorgesehen sind, über die ein ständiger Schmiermittelfluß stattfindet, der durch Drosselung zur Dämpfungswirkung mitverwendet wird.

22. Durchbiegungseinstellwalze nach einem der Ansprüche 13 bis 21,
**dadurch gekennzeichnet,**
**daß** die Dämpfungselemente (17) wenigstens teilweise als Verdrängungs- oder Quetschöldämpfer ausgebildet sind.

23. Durchbiegungseinstellwalze nach einem der Ansprüche 13 bis 22,
**dadurch gekennzeichnet,**
**daß** die Dämpfungselemente (17) wenigstens teilweise als Reibungsdämpfer ausgebildet sind.

24. Durchbiegungseinstellwalze nach einem der Ansprüche 13 bis 23,
**dadurch gekennzeichnet,**
**daß** der Walzenmantel (1) gegenüber dem Joch (3) durch eine Mehrzahl von Stützelementen (4) abgestützt ist und zwischen den Stützelementen (4) Dämpfungselemente (17) vorgesehen sind.

## Claims

1. Adjustable deflection roll comprising a rotating roll jacket (1), a carrier (3) which passes axially through the roll jacket (1) and is rotationally fixedly held at its ends in frames (2) and at least one support element (4) arranged on the carrier (3) at the inner side of the roll jacket (1) and exerting a support force in a pressing plane, wherein at least one axial end of the roll jacket (1) or an axial projection (13) associated with this is rotatably held on an axial guide projection (7) of a bearing housing (6, 7) extending in the region between the roll jacket (1) or the axial projection (13) and the carrier (3), wherein the axial guide projection is supported by a torque converter bearing secured against rotation at the carrier (3) in order to take up the torques which are necessarily transmitted from the drive to the bearing housing in operation,
**characterised in that**
the bearing housing (6, 7) is guided in a straight line in the region of an axial end of its guide projection (7) perpendicular to the roll axis in the pressing plane on a guide ring (12) which is held rotatably and tiltably on the carrier (3); and **in that** the axial guide projection (7) is secured against rotation at its opposite end by at least one pair of guide elements (8, 9) which are provided on it or on the carrier (3) and which act as a torque converter bearing with respect to the drive.

2. Adjustable deflection roll in accordance with claim 1,
**characterized in that** the bearing housings (6, 7) are secured on the carrier (3) against rotation at both roll ends.

3. Adjustable deflection roll in accordance with claim 1 or claim 2, **characterized in that** the guide elements (8, 9) are substantially arranged in the pressing plane.

4. Adjustable deflection roll in accordance with any one of claims 1 to 3, **characterized in that** two pairs of co-operating guide elements (8, 9) are provided on diametrically oppositely disposed sides of the carrier (3).

5. Adjustable deflection roll in accordance with any one of claims 1 to 3, **characterized in that** a pair of guide elements (8, 9) is provided between the carrier (3) and the guide projection (7) and **in that** a further pair of guide elements (10, 11) is preferably provided at the side of the carrier (3) opposite to the guide elements (8, 9), with the two pairs of guide elements (8, 9; 10, 11) being arranged on axially oppositely disposed sides of a gear set (19, 20) forming the drive for the roll jacket (1).

6. Adjustable deflection roll in accordance with any one of claims 1 to 5, **characterized in that** the bearing housing (6, 7) is substantially freely movable relative to the carrier (3) essentially in the pressing plane and perpendicular to the roll axis; and **in that** the guide elements (8, 9; 10, 11) co-operate to guide the stroke movement/displacement movement.

7. Adjustable deflection roll in accordance with any one of claims 1 to 6, **characterized in that** spigots (8, 11) and/or rings rotatably arranged thereon and guide grooves (9, 10) which stand in engagement with them are provided as the guide elements (8, 9; 10, 11).

8. Adjustable deflection roll in accordance with claim 6 or claim 7, **characterized in that** the guide ring (12) has a guide flange at the outer side.

9. Adjustable deflection roll in accordance with claim 8, **characterized in that** the guide ring (12) is rotatably and pivotally held on the carrier (3) by a pivot bearing (15), in particular a pivot bearing (15) having a spherical bearing surface.

10. Adjustable deflection roll in accordance with any one of claims 6 to 9, **characterized in that** the roll jacket (1) or its axial projection (13) has a ring gear (19) at the outside at one axial end; and **in that** the axial centers of the ring gear (19), of the bearing (5) which rotatably holds the roll jacket (1) on the bearing housing (6, 7) and of the spherical support of the guide ring (12) lie substantially in a common plane (E) perpendicular to the roll axis (X).

11. Adjustable deflection roll in accordance with any of claims 6 to 10, **characterized in that** the guide ring (12) serves as an abutment for the adjustment movement of the bearing housings (6, 7) in the pressing plane, with the bearing housing (6, 7) contacting the abutment in the operation of the roll.

12. Adjustable deflection roll in accordance with any of claims 6 to 11, **characterized in that** at least one piston in cylinder arrangement (18) is provided between the carrier (3) and the roll jacket (1), or its axial projection (13), or the guide projection (7) of the bearing housing (6, 7), in order to relieve the roll jacket (1) from weight forces acting outside of the working width of the roll jacket (1) and/or to load or relieve the jacket ends in order to influence the pressing force distribution in the press gap by controlled pressure fluid loading and/or in order to lock the roll jacket (1) in a position separated from a counter-roll by blocking the pressure fluid return flow out from the piston in cylinder arrangement (18).

13. Adjustable deflection roll in accordance with any of claims 6 to 12, **characterized in that** at least one damping device active to damp relative movements between the carrier (3) and the roll jacket (1) is provided at at least one of the roll ends between the roll jacket (1) or the axial projection (13) of the roll jacket (1) and the carrier (3).

14. Adjustable deflection roll in accordance with claim 13, **characterized in that** damping devices are provided at both roll ends.

15. Adjustable deflection roll in accordance with claim 13 or claim 14, **characterized in that** at least one damping device has at least one damping element (17) provided between the roll jacket (1) or the axial projection (13) of the roll jacket (1) and the carrier (3).

16. Adjustable deflection roll in accordance with any of claims 13 to 15, **characterized in that** at least one damping device has a damping element (17) provided outside of the roll; and **in that** relative movements between the roll jacket (1) and the carrier (3) are picked up by a piston in cylinder arrangement (18) and conducted on to the damping element (17) via a hydraulic line.

17. Adjustable deflection roll in accordance with claim 15 or claim 16, **characterized in that** the damping element (17) or the piston in cylinder arrangement (18) of at least one damping device is located between a carrier spigot tapered relative to the central region of the carrier (3) and the axial projection (13) of the roll jacket (1).

18. Adjustable deflection roll in accordance with any of claims 15 to 17, **characterized in that** the roll jacket (1) is held at the bearing housing (6) by two axially spaced apart rolling element bearings (5, 5a); and **in that** the damping element (17), or the piston in cylinder arrangement (18) of at least one damping device, is provided between the two rolling element bearings (5, 5a).

19. Adjustable deflection roll in accordance with any of claims 15 to 18, **characterized in that** the damping element (17) or the piston in cylinder arrangement (18) of at least one damping device is supported between the carrier (3) and a guide projection (7) extending in the intermediate space between the carrier (3) and the roll jacket (1) and coupled via bearings to the roll jacket (1) in conformity with the stroke.

20. Adjustable deflection roll in accordance with any of claims 15 to 19, **characterized in that** a guide projection (7) coupled via bearings to the roll jacket (1) in conformity with the stroke engages into the intermediate space between the carrier (3) or the carrier spigot and the roll jacket (1) or the axial projection (13) of the roll jacket (1); and **in that** the damping element (17) or the piston in cylinder arrangement (18) of at least one damping device passes through the guide projection (7) and acts directly on the inner side of the roll jacket (1) or of the projection (13).

21. Adjustable deflection roll in accordance with claim 20, **characterized in that**, in order to overcome the relative movement between the static damping element (17) and the rotating roll jacket (1) or the axial projection (13), hydrostatic pockets are provided in the damping element (17), or in the piston in cylinder arrangement (18), via which a continuous lubricant flow takes place which is co-used by restriction for the damping action.

22. Adjustable deflection roll in accordance with any of claims 13 to 21, **characterized in that** the damping elements (17) are at least partially formed as a displacement or squash oil damper.

23. Adjustable deflection roll in accordance with any of claims 13 to 22, **characterized in that** the damping elements (17) are at least partly formed as frictional dampers.

24. Adjustable deflection roll in accordance with any of claims 13 to 23, **characterized in that** the roll jacket (1) is supported relative to the carrier (3) by a plurality of support elements (4) and damper elements (17) are provided between the support elements (4).

## Revendications

1. Cylindre à réglage de flexion comportant : une enveloppe de cylindre périphérique (1), un joug (3) qui traverse l'enveloppe de cylindre (1) axialement et qui est maintenu de manière fixe en rotation à ses extrémités dans des bâtis (2), ainsi qu'au moins un élément d'appui (4) disposé sur le joug (3) et exerçant dans un plan de pression une force d'appui sur la face interne de l'enveloppe de cylindre (1), au moins une extrémité axiale de l'enveloppe de cylindre (1) ou un appendice axial (13) associé à celle-ci étant monté(e) de manière mobile en rotation au moyen d'au moins un palier (5, 5a) sur une saillie de guidage axiale (7) d'un boîtier de palier (6, 7) s'étendant dans la zone située entre l'enveloppe de cylindre (1) ou l'appendice axial (13) et le joug (3), la saillie axiale de guidage étant empêchée de tourner au niveau du joug (3) par un organe de réaction aux moments de torsion, et ce, afin d'amortir les moments de torsion qui, en cours de fonctionnement, sont inévitablement transmis au boîtier de palier par l'entraînement,
**caractérisé en ce que** le boîtier de palier (6, 7), dans la zone d'une extrémité axiale de sa saillie de guidage (7), est guidé de manière rectiligne dans le plan de pression perpendiculairement à l'axe du cylindre par un anneau de guidage (12) maintenu sur le joug (3) de manière mobile en rotation et en basculement et **en ce que** la saillie axiale de guidage (7), à son extrémité opposée, est empêchée de tourner par au moins une paire d'éléments de guidage (8, 9) prévus sur celle-ci ou sur le joug (3), lesquels agissent en tant qu'organe de réaction aux moments de torsion par rapport à l'entraînement.

2. Cylindre à réglage de flexion selon la revendication 1,
**caractérisé en ce que**, aux deux extrémités de cylindre, les boîtiers de palier (6, 7) sont empêchés de tourner au niveau du joug (3).

3. Cylindre à réglage de flexion selon la revendication 1 ou 2,
**caractérisé en ce que** les éléments de guidage (8, 9) sont sensiblement disposés dans le plan de pression.

4. Cylindre à réglage de flexion selon l'une des revendications 1 à 3,
**caractérisé en ce qu'**il est prévu deux paires d'éléments de guidage coopérants (8, 9) sur des côtés diamétralement opposés du joug (3).

5. Cylindre à réglage de flexion selon l'une des revendications 1 à 3,
**caractérisé en ce qu'**il est prévu une paire d'éléments de guidage (8, 9) entre le joug (3) et la saillie de guidage (7) et **en ce qu'**une autre paire d'éléments de guidage (10, 11) est prévue de préférence du côté du joug (3) opposé aux éléments de guidage (8, 9), les deux paires d'éléments de guidage (8, 9 ; 10, 11) étant disposées sur des côtés axialement opposés d'un jeu de roues dentées (19, 20) formant l'entraînement de l'enveloppe de cylindre (1).

6. Cylindre à réglage de flexion selon l'une des revendications 1 à 5,
**caractérisé en ce que** le boîtier de palier (6, 7) peut librement se déplacer par rapport au joug (3) sensiblement dans le plan de pression et perpendiculairement à l'axe du cylindre et les éléments de guidage (8, 9 ; 10, 11) coopèrent pour guider le mouvement de course ou de translation.

7. Cylindre à réglage de flexion selon l'une des revendications 1 à 6,
**caractérisé en ce qu'**il est prévu, en tant qu'éléments de guidage (8, 9 ; 10, 11), des tenons (8, 11) et/ou des anneaux disposés de manière mobile en rotation sur ceux-ci et des rainures de guidage (9, 10) en prise avec ces derniers.

8. Cylindre à réglage de flexion selon la revendication 6 ou 7,
**caractérisé en ce que** l'anneau de guidage (12) comporte extérieurement une bride de guidage.

9. Cylindre à réglage de flexion selon la revendication 8,
**caractérisé en ce que** l'anneau de guidage (12) est maintenu de manière mobile en rotation et en basculement sur le joug (3) par un palier articulé (15) ayant notamment une surface d'appui de forme sphérique.

10. Cylindre à réglage de flexion selon l'une des revendications 6 à 9,
**caractérisé en ce que** l'enveloppe de cylindre (1) ou son appendice axial (13) porte extérieurement, à une extrémité axiale, une couronne dentée (19) et **en ce que** les centres axiaux de la couronne dentée (19), du palier (5) maintenant l'enveloppe de cylindre (1) mobile en rotation sur le boîtier de palier (6, 7) et du support sphéroïdal de l'anneau de guidage (12) sont sensiblement dans un plan commun (E) perpendiculaire à l'axe du cylindre (X).

11. Cylindre à réglage de flexion selon l'une des revendications 6 à 10,
**caractérisé en ce que** l'anneau de guidage (12) sert de butée pour le mouvement de réglage des boîtiers de palier (6, 7) dans le plan de pression, butée contre laquelle le boîtier de palier (6, 7) s'applique lorsque le cylindre fonctionne.

12. Cylindre à réglage de flexion selon l'une des revendications 6 à 11,
**caractérisé en ce qu'**il est prévu au moins un dispositif formant vérin (18) entre le joug (3) et l'enveloppe de cylindre (1) ou son appendice axial (13), ou la saillie de guidage (7) du boîtier de palier (6, 7), et ce, pour décharger l'enveloppe de cylindre (1) des poids agissant en dehors de la largeur de travail de l'enveloppe de cylindre (1) et/ou pour charger ou décharger les extrémités d'enveloppe servant à influer sur la répartition de la force de compression dans la fente de compression par injection commandée de moyen de pression et/ou pour arrêter l'enveloppe de cylindre (1) dans une position décollée d'un contre-cylindre en bloquant le reflux du moyen de pression en dehors du dispositif formant vérin (18).

13. Cylindre à réglage de flexion selon l'une des revendications 6 à 12,
**caractérisé en ce qu'**il est prévu, à l'une au moins des extrémités de cylindre, au moins un dispositif d'amortissement agissant entre l'enveloppe de cylindre (1) ou l'appendice axial (13) de l'enveloppe de cylindre (1) et le joug (3), et ce, pour amortir les mouvements relatifs entre le joug (3) et l'enveloppe de cylindre (1).

14. Cylindre à réglage de flexion selon la revendication 13,
**caractérisé en ce qu'**il est prévu des dispositifs d'amortissement aux deux extrémités de cylindre.

15. Cylindre à réglage de flexion selon la revendication 13 ou 14,
**caractérisé en ce qu'**au moins un dispositif d'amortissement comporte au moins un élément amortisseur (17) prévu entre l'enveloppe de cylindre (1) ou l'appendice axial (13) de l'enveloppe de cylindre (1) et le joug (3).

16. Cylindre à réglage de flexion selon l'une des revendications 13 à 15,
**caractérisé en ce qu'**au moins un dispositif d'amortissement comporte un élément amortisseur (17) prévu à l'extérieur du cylindre et les mouvements relatifs entre l'enveloppe de cylindre (1) et le joug (3) sont absorbés par un dispositif formant vérin (18) et sont transmis à l'élément amortisseur (17) par l'intermédiaire de conduits hydrauliques.

17. Cylindre à réglage de flexion selon la revendication 15 ou 16,
**caractérisé en ce que** l'élément amortisseur (17) ou le dispositif formant vérin (18) d'au moins un dispositif d'amortissement se trouve entre un tourillon de joug effilé par rapport à la zone centrale du joug (3) et l'appendice axial (13) de l'enveloppe de cylindre (1).

18. Cylindre à réglage de flexion selon l'une des revendications 15 à 17,
**caractérisé en ce que** l'enveloppe de cylindre (1) est maintenue sur le boîtier de palier (6) par deux paliers à roulements (5, 5a) distants axialement et l'élément amortisseur (17) ou le dispositif formant vérin (18) d'au moins un dispositif d'amortissement est prévu entre les deux paliers à roulements (5, 5a).

19. Cylindre à réglage de flexion selon l'une des revendications 15 à 18,
**caractérisé en ce que** l'élément amortisseur (17) ou le dispositif formant vérin (18) d'au moins un dispositif d'amortissement prend appui entre le joug (3) et une saillie de guidage (7) s'étendant dans l'intervalle situé entre le joug (3) et l'enveloppe de cylindre (1) et couplée de manière concordante en course à l'enveloppe de cylindre (1) par l'intermédiaire de paliers.

20. Cylindre à réglage de flexion selon l'une des revendications 15 à 19,
**caractérisé en ce qu'**une saillie de guidage (7) couplée de manière concordante en course à l'enveloppe de cylindre (1) par l'intermédiaire de paliers s'engage dans l'intervalle situé entre le joug (3) ou le tourillon de joug et l'enveloppe de cylindre (1) ou l'appendice axial (13) de l'enveloppe de cylindre (1) et l'élément amortisseur (17) ou le dispositif formant vérin (18) d'au moins un dispositif d'amortissement traverse la saillie de guidage (7) et agit directement sur la face interne de l'enveloppe de cylindre (1) ou de l'appendice (13).

21. Cylindre à réglage de flexion selon la revendication 20,
**caractérisé en ce que**, pour surmonter le mouvement relatif entre l'élément amortisseur (17) statique et l'enveloppe de cylindre (1) ou l'appendice axial (13) rotatifs, il est prévu, dans l'élément amortisseur (17) ou dans le dispositif formant vérin (18), des poches hydrostatiques par l'intermédiaire desquelles a lieu un flux continuel de lubrifiant qui contribue, par étranglement, à l'effet d'amortissement.

22. Cylindre à réglage de flexion selon l'une des revendications 13 à 21,
**caractérisé en ce que** les éléments amortisseurs (17) sont réalisés au moins partiellement sous forme d'amortisseur hydraulique à refoulement ou compression.

23. Cylindre à réglage de flexion selon l'une des revendications 13 à 22,
**caractérisé en ce que** les éléments amortisseurs (17) sont réalisés au moins partiellement sous forme d'amortisseur à friction.

24. Cylindre à réglage de flexion selon l'une des revendications 13 à 23,
**caractérisé en ce que** l'enveloppe de cylindre (1) est soutenue par rapport au joug (3) par une pluralité d'éléments d'appui (4) et des éléments amortisseurs (17) sont prévus entre les éléments d'appui (4).
